# EUROPEAN PATENT APPLICATION

(11) **EP 2 236 223 A2**
(43) Date of publication of application: **06.10.2010**
(21) Application number: 08789124.8
(22) Date of filing: 07.05.2008
(51) Int. Cl.: B08B 3/02, B08B 1/00, A47L 9/06, A46B 11/06, B60S 3/04

(54) **HYDRO-WASH-ASPIRATOR**

(30) Priority: 09.05.2007 ES 200701013
(71) Applicant: Fernandez Gonzalez, Ygnacio, 28080 Madrid (ES)
(72) Inventor: Fernandez Gonzalez, Ygnacio, 28080 Madrid (ES)
(86) International application number: PCT/IB2008/002269
(87) International publication number: WO 2008/139332

(57) **Abstract**

This invention is electrical and used for cleaning, specially washing and waxing cars. Its main feature is being able to project a cleaning solution, wash and suck up the just removed dirt, storing it. The first operation, tri-functional, is done by a head, formed by a brush -preferably of round section- in which the cleaning bristles (1), which in the example are in the shape of a ring, are set. Among the bristles end the projecting pipes (3), which come from the pipe (4) that forms the handle with the sucking up pipe (5) which, in the drawing ends, as it has a bigger diameter, in the center. The inner space, limited by the washing bristles (1), the side (2) of the head which holds them and the surface being cleaned, is a chamber where washing and sucking up happen. If we add to these limits the ends of the projecting and sucking up pipes we have the washing-sucking up system, which is the base for the tri-functional operation: projecting the cleaning solution, washing and sucking up. When cleaning begins, the volume which holds the bag with the cleaning solution is full and unfolded, as the bag for the waste liquid is folded and empty; as cleaning continues the volume of the former bag decreases as the volume of the latter begins to increase, as both bags are flexible as well as impermeable. Both are extractable, in order to be replaceable.

## Description

### Mechanics.

The invention is an appliance with the ability to perform simultaneously the three operations involved in cleaning: Projecting the cleaning solution; washing and sucking up the dirt just removed from the cleaned surface. It also stores the disposable waste in a removable bag that fills the same space previously filled by the bag containing the cleaning solution.

As the cleaning solution is kept in a flexible and impermeable bag, which is full when cleaning begins, and the bag which stores the cleaning solution after the cleaning is empty and folded, it is possible to use the same storage space for both bags, each of them independently connected to their corresponding pipes.

Current technological state: Appliances suited to the ends proposed in this request belong to the fields of domestic and industrial cleaning. They have progressed, among other features, in the number of simultaneous possible operations which they can do, from those that can only project water or steam and those which suck up to those which project water and wash at the same time, and finally, but not least, to those which project steam or project steam and suck up dirt and liquids. An explanation connected to this point can be read in "Document 1", in this request itself.

The technical exposition of the problem is related, mostly, to the existence of a huge car population whose owners are forced to wash them only in car washing facilities, spending fuel, time and money, factors which are increasingly scarce nowadays. That factor is worsened by the lack of existence of any appliance able to do this activity domestically. It also necessary to add that the main resource spent by car washing, water, is one whose saving is, by the common population as by industry, more inevitable and which is currently highly wasted by car washing facilities.

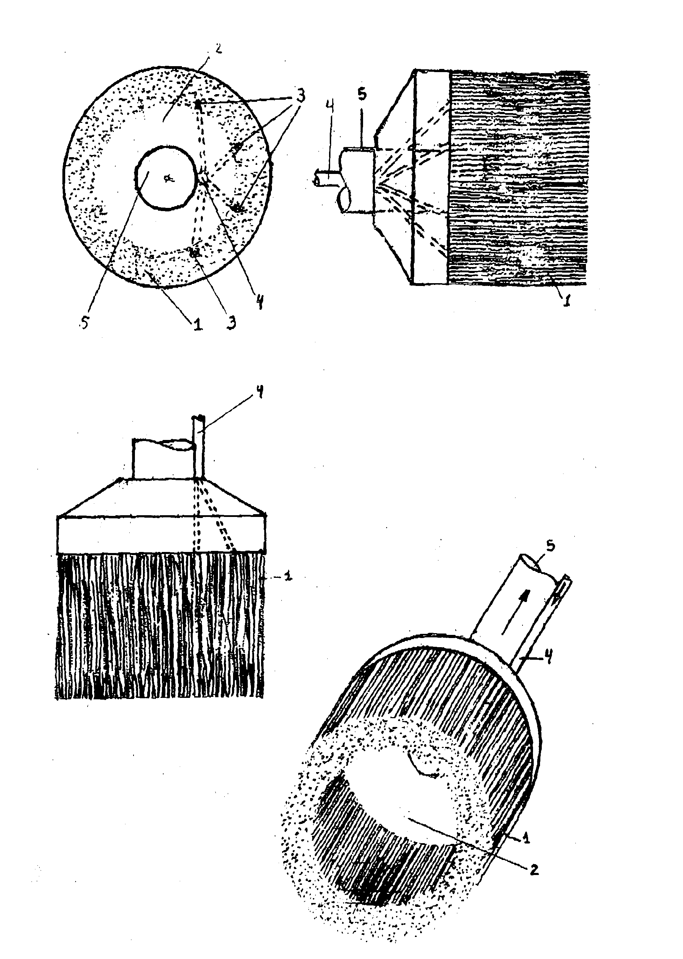

Solution to the presented problems. This invention includes, in the brushing and washing operation, a sort of chamber where the three essential operations are performed: projecting the cleaning water, washing and sucking up. The cleaning solution itself is sucked up, expelled by the side of the head, together with the dirt, just removed by the triple action of the washing bristles; acting on the dirt, removing it, they simultaneously hold the waste solution just enough to be sucked up and let air from outside in, attracted by the sucking up potential and letting it be done. The sucking up tube ends in the side of the head, mentioned above. For a better understanding is necessary to refer to a particular case, that is, a particular drawing. For instance, in the drawing we can see a head whose side (2), which holds the washing bristles (1) is round and the washing bristles themselves are set in a cylinder-shape. The pipe which projects (4) the cleaning solution splits into several pipes which end (3) in the previously referred side, more precisely among the washing bristles, so the solution touches directly the washing bristles and the surface to be cleaned when it gets out the apparatus. The motions of the brush remove the dirt with the assistance of the cleaning solution, which dissolves it. The resulting waste solution is held, just at once until it is sucked up, subject to the availability of outside air, which enters through the washing bristles. The waste solution is directed to the storage bag, which unfolds as cleaning proceeds and the storage bag for the cleaning solution gets empty.

All of this is made possible by:
1. The usage of two pipes, one for clean water and the cleaning solution, and another for the waste solution and dirty water;
2. The disposition of both pipes, which end in the head formed by a brush. The first pipe can be split in several to end among the cells, each of them carrying a wide set of washing bristles, set, in the example, in a fence-shape, in order to ease the washing operation and hold the water and the cleaning solution with the just removed dirt so, just at the right moment, that waste solution can be sucked up by the strong sucking up potency, more or less 1400 w, and the washing bristles which hold the waste solution as well as let the outside air in. The second pipe ends in the centre of the side that holds the washing bristles, in the example, and it has a bigger diameter;
3. The high sucking up potency, at the same time the cleaning solution is projected, with both functions controlled from the handle or the handle and the pipe;
4. The use of the same storage space to keep the two bags, flexible and impermeable, one for the cleaning solution and another for the waste solution, as, during the
5. cleaning, the volume of the first -for the cleaning solution- lessens as the volume of the second -for the waste solution- increases.

### The main advantages according to the current technological state are:

1. It makes possible to turn the washing and waxing of cars, which can only be done in quite expensive car washing facilities, into an almost domestic activity.
2. It makes possible an increase in autonomous labor as the cost of investment to do this activity decreases, something which is more important as unemployment is on the rise.
3. It saves fuel, money and time to car users when they fulfill the need to clean their vehicles.
4. It saves water, as washing, cleaning and sucking up the dirt are all done precisely, unlike what's currently done, with the cleaning liquid and the washing water running over the surface being cleaned.
5. It uses the same space to keep the two bags, one for the cleaning solution and another for the waste solution.

### Way to build the invention

It should be built, preferably, in appliances with a minimum capacity between 30 and 50 liters. This capacity will be the same for both bags, one for the cleaning solution and another for the waste solution, as both must be both flexible or foldable, and impermeable. It should have a high sucking up potency, between 1400 and 1800 w, and a lesser projection potency. The projecting holes should be of a small diameter, more or less 2mm, and should be spread among the cells holding the washing bristles. It should have in the handle a control regulator for both sucking up and projecting pressure; it could also be located, preferably, in the mast or the pipe holding the head, so it will be possible to control with both hands the projecting pressure and the sucking up flow. It should have a tank for solid or liquid soap, with a capacity of a 1.5% of the bag for the cleaning solution. The head should have no more than 1960 square centimeters of area in the side, round or square, where the pipes end, which also contains the cells, with a diameter of 5 centimeters, which hold the washing bristles. They form several lines, and should be no more than 8 centimeters long, in a fence or spiral shape, the former 4 centimeters thick. The bristles may form a cube, a cylinder or a truncated cone, any of the bases of which could match the side of the head which holds them.

### Brief description of the drawings.

The drawing is an example of a head, it consists of a front view, a lateral view and an up view of a head whose washing bristles (1) are set in the shape of a cylinder in which one of its bases is, during the washing, the surface being cleaned, the other, the side (2) itself of the head which holds the washing bristles. The pipes (3) in which the pipe that projects the cleaning solution (4) end in this side, as well as the sucking up pipe (5). In the example there's an isometric view that shows the direction and orientation of the liquid in the sucking up pipe and the cleaning solution projecting pipe. The point is the chamber where the three operations are done, which is limited by the surface being cleaned, the washing bristles, and the side holding them, where the pipes that project and suck up the solutions end.

## Claims

1. Electric appliance able to simultaneously project the cleaning solution, wash and sucking up the just removed dirt. The first operation, tri-functioning, is done by a head, formed by a brush that holds the washing bristles, in which both the sucking up and the cleaning solution projecting pipe end. More specifically, what is being claimed is the system of washing-sucking up of the head, a space limited by the side of the head holding the cleaning bristles, the bristles themselves and the surface being cleaned. The ends of the pipes which carry the cleaning solution and the waste solution are important elements of such a system. Shapes can differ, either that of the side of the head as that formed by the washing bristles, up to the orientation and number of the ends of the pipes.

2. A common space to store two bags, one for the cleaning solution and another for the waste liquid, as the volume of one always increases as the volume of the other decreases, and the usage for these bags of a flexible and impermeable material, bags which must be replaceable in order to be changed. Each of them is independent of the other and is connected to a pipe, one to the pipe for the cleaning solution, the other to the sucking up pipe.
